# EUROPEAN PATENT APPLICATION

(11) **EP 3 922 896 A1**
(43) Date of publication of application: **15.12.2021**
(21) Application number: 20179744.6
(22) Date of filing: 12.06.2020
(51) Int. Cl.: F16L 41/00, F16L 41/04

(54) **MULTI-SENSOR MOUNTING SYSTEM**

(71) Applicant: ABB Schweiz AG, 5400 Baden (CH)
(72) Inventor: LINCOLN, David, PE191LN St Neots (GB); SZASZ, Paul, 68723 Plankstadt (DE); KEEPING, Sean, BR2 0HP Shortlands (GB); HOLMES, Andrew, SW7 2AZ London (GB); YEATMAN, Eric, SW7 2AZ London (GB); YUAN, Chao, SW7 2AZ London (GB); BOYLE, David, SW7 2AZ London (GB); YANG, Samuel, SW7 2AZ London (GB); WILLIAMS, Daryl, SW7 2AZ London (GB)
(74) Representative: Maiwald Patent- und Rechtsanwaltsgesellschaft mbH

(57) **Abstract**

The invention relates to a multi-sensor mounting system (10), which comprises a secondary pipe (100) and an adapter (210), for detecting or monitoring a characteristic or a plurality of characteristics of a fluid in a process pipe (20). The secondary pipe (100) comprises a fastening device (110), configured to fix the secondary pipe (100) to the process pipe (20), and a valve (120), configured to be switchable between an open state and a closed state. The adapter (210) is configured to connect a sensor module (200) to the secondary pipe (100) in a detachable manner. The valve (120) is configured to allow a sensing probe (201) of the sensor module (200) being inserted into the process pipe (20) in the open state, and to block a fluid flow in the secondary pipe (100) in the closed state, when the sensing probe (201) is removed from the secondary pipe (100).

## Description

### Field of the invention

The present invention relates to the field of process monitoring and process control control. In particular, the invention relates to a multi-sensor mounting system and a method for detecting or monitoring a characteristic or a plurality of characteristics of a fluid in a process pipe, the use of a multi-sensor mounting system for mounting a sensor module to a process pipe, the use of a sensor module for a multi-sensor mounting system and the use of an adapter for connecting a sensor module to a multi-sensor mounting system.

### Background

In the water, chemical, food and beverage industries, sensor technology is widely applied for process monitoring, especially for monitoring fluid that is carried in process pipes. Conventional sensors for process monitoring are typically limited to a single measurement, as each sensor that is designed to measure a single chemical or physical property can only be installed separately. Moreover, the sensors are of relatively large dimensions, and the installation generally requires removing a section of a pipe or cutting a relatively large hole in the pipe wall. This may lead to a change in the mechanical integrity of the pipe system and thus to a higher installation complexity to conduct reinforcement measures to maintain the mechanical integrity. The sensor installation process will frequently require temporary shutting down of the process, and installation and the corresponding reinforcement measures are normally performed by specialist contractors, all adding further to the installation costs.

### Summary

It may be seen as an objective of the invention to develop a flexible and comprehensive process sensing system to allow detection of a wide range of process variables.

The objective is achieved by the subject matter of the independent claims. The dependent claims, the following description and the drawings show embodiments of the invention.

According to a first aspect, a multi-sensor mounting system for detecting or monitoring a characteristic or a plurality of characteristics of a fluid in a process pipe is provided. The multi-sensor mounting system comprises a secondary pipe and an adapter. The secondary pipe of the multi-sensor mounting system comprises a fastening device, which is configured to fix the secondary pipe to the process pipe, and a valve, which is configured to be switchable between an open state and a closed state.

The adapter of the multi-sensor mounting system is configured to connect a sensor module to the secondary pipe in a detachable manner.

The multi-sensor mounting system may be an invasive multi-sensor mounting system.

The multi-sensor mounting system may be designed as a miniaturised, multi-parameter sensor system for concurrently detecting or monitoring one or a plurality of physical and/or a chemical characteristics or properties of a process fluid, such as a flow rate, a temperature, a density, a pressure, a thermal conductivity, a turbidity, a pH, an activity of an oxidizer or a reducer in a solution.

The sensor module may be mounted at a single site of the main process pipe. Compared to the conventional sensor installation, retrofitting the multi-sensor mounting system to the process pipe may advantageously refrain from removing a section of a pipe or cutting a large hole through the pipe wall that may cause a dramatic change in the mechanical integrity of the pipe.

Moreover, the miniaturised sensor module may advantageously lower a risk of a leakage during installing or swapping a sensor module or during the measurement. Also, the miniaturised sensor module may be installed to or removed from the secondary pipe without interrupting the flow in the process pipe and/or the associated process operation.

The valve of the secondary pipe is further configured to allow a sensing probe of the sensor module being inserted into the process pipe in the open state, and to block a fluid flow in the secondary pipe in the closed state, when the sensing probe is removed from the secondary pipe.

Compared to a non-invasive or a semi-invasive measurement, an invasive measurement may require that the sensor or the sensing probe is configured to be inserted or partially inserted into the process pipe through an opening in the pipe wall and in direct contact with the fluid during the measurements. In this way, the sensing probe may be configured to carry out a continuous real-time fluid monitoring without or minimally interrupting the fluid flow in the main process pipe.

Alternative to the sensing probe protruding into the process pipe, the sensing probe may also be arranged inside the secondary pipe and configured to sample the fluid via the hole in the pipe wall. In this case, an additional fluid delivery element may be provided in place and configured to deliver the fluid to the secondary pipe and to the sensing probe and prevent from stagnation of the fluid around the sensor probe.

The secondary pipe may be designed to be a short section of a smaller bore pipe and radially oriented relative to the main process pipe. The secondary pipe is configured to be a connecting element for retrofitting the sensor module to the process pipe. The secondary pipe may comprise a through hole with a significantly smaller diameter than the main process pipe, so that a small flow into the secondary pipe by installing or removing the sensor module may not affect the fluid flow in the process pipe.

As a free sensor port for the sensor module, the fastening device of the secondary pipe is arranged at an end of the secondary pipe and designed as a curved flange or a saddle flange to fit snugly against the cylindrical process pipe.

In order to make the sensor port compatible with a wide range of process pipe diameters, the fastening device at the end of the secondary pipe is designed to comprise a plurality of flanges, each of which has an individual flange curvature to mate with the curvature of the process pipe. The fastening device at the end of the secondary pipe may also be designed to comprise a plurality of flanges, each of which consists of a different material or is mountable to the process pipe using an individual mounting method, e.g. a different adhesive to suit a different process pipe material.

Alternatively, the fastening device is designed to be a universal flange that is flexible and deformable to suit different pipe diameters.

The secondary pipe may further comprise a receiving port, which is arranged at the other end of the secondary pipe and configured to allow the sensing probe sliding into the secondary pipe and to allow the adapter mounting to the secondary pipe by means of a first connection, and a hollow through hole, which is configured to allow the sensing probe sliding through when being inserted into the process pipe. The receiving port may be a free port of the valve or additionally arranged above the valve.

It may be possible to plug hole through the secondary pipe so that the whole assembly may be removed and reused.
According to a first embodiment, the sensor module is a miniaturised sensor module comprising a diameter smaller than 20 mm.

In general, the miniaturised sensor module may comprise a reduced size with a diameter in the order of several millimetres, in particular 5 mm to 10 mm. The size of the sensor module may be further scaled down. The minimum achievable sensing probe diameter may depend on the number and the sizes of the desired sensor elements that are integrated in a single sensing probe.

The miniaturised sensor module may configured to operate with low energy.

It may be possible to arrange a plurality of spacing sensor elements along the length of the sensing probe of sensor module. In other words, multiple sensor elements may be integrated in a single sensor module of a small diameter.

The valve of the secondary pipe may be a valve which comprises a full bore opening and a minimum axial length. The valve may be configured to match the diameter of the secondary pipe, so that the valve may allow blocking the flow in the secondary pipe when the gate valve is switched to the closed state.

For example, the valve of the secondary pipe may be a gate valve or a ball valve.

In particular, the ball valve may be arranged between the flange and the receiving port of the secondary pipe.

The ball valve may be a manual ball valve or an electric ball valve that may be controlled automatically. The ball valve may be a pneumatic ball valve or a hydraulic ball valve.

The ball valve may be integrated in the secondary pipe and comprise a hollow, perforated and pivotable ball element, having a through hole, and a valve handle that may be rotated about an axis perpendicular to the through hole of the secondary pipe. In the open state of the ball valve, the ball valve is arranged in such a way that the ball's hole is in line with the through hole of the secondary pipe, in order to generate a sliding path for the sensing probe and allow the sensing probe sliding through the ball element and being inserted into the secondary pipe. In the closed state, the ball's hole is rotated, e.g. 90 degrees from the open state by means of the valve handle, so that the fluid is not able to flow out from the secondary pipe, when removing the sensor module from the secondary pipe.

According to another embodiment, the multi-sensor mounting system further comprises a tightening device and a sealing device. The tightening device comprises a locking ring and is configured to fix the sensor module to the adapter and to the secondary pipe. The sealing device is configured to seal the sensing probe of the sensor module, the adapter and/or the tightening device from the environment.

According to another embodiment, the adapter of the multi-sensor mounting system comprises a first portion and a second portion. The first portion of the adapter is configured to be mounted to the secondary pipe by means of a first connection, and the second portion of the adapter comprises a recess, in which the sealing device are arranged, and is configured to receive the tightening device by means of a second connection, in order to fix the sensor module.

For example, the first and second connections may be threaded connections or push-fit connections and configured to connect the adapter with the secondary pipe and the sensor module firmly.

The first connection may be a first thread connection or a second push-up connection, and the second connection may be a second thread connection or a second push-up connection.

The adapter may further comprise a though hole in the second portion, which may be of the same diameter as the through hole of the secondary pipe. Furthermore, the adapter may be configured to allow the sensing probe sliding through the first portion and a second portion and to provide a sliding seal when removing or swapping the sensing module.

A fluid-tight seal may be provided between the adapter and the receiving port of the secondary pipe. The fluid-tight seal may be designed to be complementary tapered threads at the receiving port and the first portion of the adapter. Alternatively, the fluid-tight seal may be designed as a push-fit connection.

A second fluid-tight seal may be provided between the adapter and the tightening device, designed as a bonded seal and configured to provide a seal during the normal operation of the sensor module and during the sensing probe being inserted into or removed from the secondary pipe. For example, the elastomer sealing device may be bonded to an outer metal washer. The bonded seal is arranged in a counter bore in the top of the adapter. In the normal operation of the sensor module, the locking ring is tightened, compressing the sealing device and providing a high-quality seal between the adapter and the sensing probe. When inserting or removing the sensing probe, the locking ring is loosened to allow the sensing probe sliding towards the second fluid-tight seal.

According to another embodiment, the sensor module of the multi-sensor mounting system is self-powered or connected to an electronics via a cable.

The multi-sensor mounting system may further comprise an electronics module, which is connected to the sensor module via a cable. The sensor module may be connected to a secondary electronics module via a cable, which secondary electronics module may comprise a battery or another power source, a signal processing circuits, and a wireless communication circuit and/or an antenna.

Alternatively, the sensor module may be a self-powered sensor without cabling or a wireless sensor that may enable a fully functional wireless sensor communication. The self-powered sensor may gain a power from the fluid flow by means of an integrated energy harvester, a wireless charging, a thermo-electric device, and/or a solar power device. The wireless sensor may be configured to communicate with an external electronics module or a cloud system via wireless data transmission. The wireless sensor may also be configured to communicate directly or via a gateway with other sensors, for example to combine the sensed parameters from two or more sensor modules to derive additional parameters.

A connectivity between a plurality of sensors or sensor modules may be generated by means of a wireless mesh, a wired or wireless gateway to a cloud system.

The sensor module may be a hot-tap retractable sensor. Alternatively, the sensor module may be a customized or commercially available off-the-shelf sensor module.

According to another embodiment, the sensing probe of the sensor module is a multi-parameter sensing measurement device that comprises a plurality of sensor elements.

The sensor module may be a monolithic multi-parameter sensor module or a highly integrated sensor module. In other words, the sensing probe of the sensor module may be a highly integrated multi-parameter sensing measurement device, and configured to enable a simultaneous detection of a plurality of fluid parameters or characteristics. In this way, it is possible to provide a sensing probe for measuring a bespoke set of fluid characteristics.

The sensing probe may be designed to be a rod-shaped sensing probe or a narrow, cylindrical probe that is able to be inserted through the hole in the process pipe wall for measuring the plurality of the characteristics.

In order to eliminate the risk of accidentally ejecting the sensing probe during the installation or the removal of the sensor module, eventually causing an operating injury or a significant fluid loss from the process pipe, the sensor module may be designed to flare the sensing probe towards the probe tip, so that the tip diameter is larger than the through hole of the adapter. Accordingly, a collar that is arranged at the top of the sensing probe, configured to prevent the sensing probe from falling into the pipe, may be designed to be removable, so that the sensing probe may be fed into the adaptor from the bottom or the tip. Alternatively, the sensor mode may comprise an anti-blowout lip at the tip of the sensing probe, configured to prevent the sensing probe from ejecting at speed out from the secondary pipe.

According to another embodiment, the sensing probe of the sensor module is foldable. The sensing probe is configured to be in a folded state, when sliding in the secondary pipe, or in an unfolded state, when the sensing probe is inserted in the process pipe.

The sensor type may be a significant factor for the size of miniaturized sensor module. For example, for a certain sensor type such as thermal flow sensor and turbidity sensor, it may be required to arrange a plurality of detection elements in such a way, that a defined path length between the detection elements for a flow measurement is greater than the probe diameter.

In case of a pH meter, for example, the path length between the detection elements may be normal to the flow direction, the detection elements may be distributed along the length of the sensing probe so that the diameter of the sensing probe may not change significantly.

In case of a thermal flow sensor, for example, the path length between the heat and detection elements may be in the direction of the flow, requiring a larger diameter of the sensing probe tip in the process pipe. In order to reduce the sensor size and to allow inserting the sensing probe in to the small hole in the pipe wall, a foldable sensing probe is provided and configured to be switchable between a folded state and an unfolded state by means of a spring-loaded mechanism. When inserting or removing the sensing probe, the foldable sensing probe may be configured to collapse into the folded state and allow the sensing probe sliding inside the secondary pipe. When the sensing probe is inserted into the process pipe, the foldable sensing probe is configured to open up to a width greater than the probe diameter and measure the characteristic. This mechanism may be designed to be controlled automatically.

Advantageously, arranging a plurality of sensor elements along the length of sensing probe may enable a significant reduction of the sensing probe dimension and provide a compact sensor module.

According to another embodiment, the multi-sensor mounting system further comprises a tapping module comprising a hot tapping tool. The tapping module is configured to be connected to the secondary pipe and replaceable by means of the sensor module.

According to another embodiment, the hot tapping tool comprises a cutting tool or a cutter that is configured to cut a hole on the wall of the process pipe, through which hole the sensing probe can be inserted into the process pipe.

For example, the cutting tool may be a rotary cutter or a hole saw. The diameter of the hole may be the same as or slightly larger than the diameter of the sensing probe.

The tapping module comprises an electric driver that is connected to the cutting tool via a rotary shaft. The rotary shaft may pass through a rotary seal, configured to allow driving of the cutting tool towards the process pipe when the ball valve is switched in an opened state, withdrawal of the cutting tool so that the ball valve may be switched to the closed state, and rotation of the cutting tool during cutting the hole. The rotary seal is configured to allow the rotary shaft sliding axially into the secondary pipe, to seal the tapping module and the secondary pipe, and to provide a containment for a fluid flow or to prevent the fluid from leaking out from the tapping module, once the wall of the process pipe is breached by means of the cutting tool.

As the secondary pipe is configured to be a common connecting interface for the sensor module and the tapping module, the multi-sensor mounting system may significantly facilitate the deployment of the sensor module for the characteristic measurement by simply replacing the tapping module with the sensor module in a hot-swapping manner without or with minimally interrupting the fluid flow in the main process pipe.

Furthermore, mechanical reinforcement, that is often necessary for retrofitting a sensing system to a process pipe due to a relatively large change in mechanical integrity of the pipe associated with the hole cutting and sensor installation, may not be required by applying the multi-sensor mounting system due to the negligible or minimal dimensions of the hole in the pipe wall and the sensing probe. Also, the hot-tapping and the hot-swapping may not be carried out by a specialist installation expert.

According to another embodiment, the multi-sensor mounting system further comprises a second sensor module having a second sensing probe. The sensing probe of the second sensor module is configured to replace the sensor module in a hot-swapping manner.

Since the sensor module is mounted at the secondary pipe in a detachable manner, the sensor module may easily be changed when a different or an additional characteristic measurement, e.g. for a temporary installation for troubleshooting, is required.

The second sensing probe may comprise the same sensor elements as the sensing probe, so that a defective sensing probe may be easily replaced.

The second sensing probe may also comprise a plurality of sensor elements that are different from the plurality of sensor elements of the first sensing probe, so that by hot-swapping the sensing probe, the sensor module or the multi-parameter sensor module may allow a wide-scale or wide variety of characteristic measurement.

It may be advantageous to arrange the plurality of such sensors or sensor modules to acquire spatially and temporally dense information and then to analyse the data, for example e.g. by means of machine learning, for understanding the data, for optimising operation conditions and/or for predicting faults during the detection.

The operating costs may be reduced and the detection efficiency increased. Moreover, as the secondary pipe of the multi-sensor mounting system is standardized, the hot-swapping may advantageously facilitate maintenance, upgrading or updating of a detection system with the multi-sensor mounting system by quickly replacing the sensing probes with a different sensor element or a plurality of sensor elements without an additional specialized equipment or a training. Also, the hot-swapping of the sensing probe as a consumable part instead of a repair and/or a recalibration of the sensing probe may further reduce the cost for the whole detection system. Furthermore, the application of the sensor fusion or sensor integration and the corresponding data analytics may be expected to yield new insights that may not be generated by using the traditional, sparse sensing technology.

Furthermore, the receiving port at the other end of the secondary pipe is designed to be adaptable for a plurality of sensing modules of different diameters or sizes and/or for measuring different parameters, e.g. a second sensor module comprising a second sensing probe. In other words, the multi-sensor mounting system is configured to be sensor-independent, which means, the second sensor module may be configured to replace the deployed sensor module at any time in a hot-swapping manner, without affecting the flow in the process pipe.

According to another embodiment, the multi-sensor mounting system further comprises a sealing element, which is arranged at the fastening device and configured to provide a seal between the secondary pipe and the process pipe.

The sealing element may be an elastomer seal and configured to provide a primary seal between the flange and the pipe wall once the sensor module is in operation.

Additionally, the multi-sensor mounting system may further comprise an adhesive, arranged between the flange of the secondary pipe and the process pipe wall. The adhesive is configured to provide a secondary seal on the curved surface of the flange where not covered by the elastomer seal. In particular, for ease of application, the adhesive may be designed to be a pre-cut film. In this way, the primary and secondary seals are configured to prevent environmental contaminants and/or the adhesive from ingress into the process pipe and/or the hollow through hole and/or the ball valve of the secondary pipe.

Alternatively, the flange may be designed to attach to the process pipe using clamps or a collar that is placed around the process pipe wall. In this case, the elastomer seal may be configured to provide the only seal between the flange and the pipe wall when the sensor module is in operation. The adhesive 140 may be omitted.

Alternatively, depending on the pipe material, the flange may be welded to the process pipe. In this case, the weld may be configured to provide a seal when the sensor module is in operation. The elastomer seal and the adhesive may be omitted.

Additionally, the multi-sensor mounting system may further comprise a housing that is configured to be attached to the flange and enclose the flange, and/or the other components of the secondary pipe, in order to provide a physical protection.

According to another embodiment, the multi-sensor mounting system further comprises a third sensor module, which comprises an additional sensor element or an additional plurality of sensor elements that is arranged outside the process pipe and/or the secondary pipe and/or in the vicinity of the process pipe and/or the secondary pipe. The additional sensor element is a position sensor element or a GPS location sensor.

In other words, an additional sensor element or additional sensor elements may be non-invasive and arranged outside but in the vicinity of the process pipe and/or the secondary pipe. For example, the sensor element may be arranged for sensing environmental conditions in the vicinity of the process pipe for example humidity, temperature, vibration, acoustics etc. For example, the position sensor element or the GPS location sensor element may also be arranged for sensing the location of the sensor module and/or the multi-sensor mounting system.

According to another embodiment, the third sensor module is configured to connect to and communicate with the sensor module and/or the second sensor module. The data from the third sensor module and the sensor module or the second module may be combined via a common network to obtain new information about process pipe conditions. In this way, it may be possible to integrate the data inside the process pipe by means of the sensor module or the second sensor module and the data outside the process pipe by means of the third sensor module.

According to another embodiment, the multi-sensor mounting system further comprises a plugging device, which is configured to remove the multi-sensor mounting system from the process pipe or install the multi-sensor mounting system to the process pipe by plugging a hole.

The multi-sensor mounting system may be arranged between the secondary pipe and the main process pipe. The plugging device may be configured to completely remove the multi-sensor mounting system from the process pipe. Accordingly, the plugging device may be configured to seal or reseal the hole on the wall of the process pipe. Furthermore, the plugging device may be configured to reinstall the multi-sensor mounting system to the process pipe by plugging a second hole on the wall of the process pipe.

According to a second aspect, the use of a multi-sensor mounting system for mounting a sensor module to a process pipe is provided.

According to another aspect, the use of a sensor module for a multi-sensor mounting system for detecting or monitoring a characteristic or a plurality of characteristics of a fluid in a process pipe is provided.

According to another aspect, the use of an adapter for connecting a sensor module to a multi-sensor mounting system is provided.

According to another aspect, a method for detecting or monitoring a characteristic or a plurality of characteristics of a fluid in a process pipe by means of a multi-sensor mounting system is provide. The method comprises the following steps: first, providing a secondary pipe that comprises a fastening device and a valve and fixing the secondary pipe to the process pipe by means of the fastening device, subsequently, connecting a sensor module, that comprises a sensing probe, to the secondary pipe in a detachable manner and inserting the sensing probe into the process pipe by means of an adapter. The valve of the secondary pipe is configured to allow the sensing probe to be inserted into the process pipe in the open state, and to block a fluid flow in the secondary pipe in the closed state, when the sensing probe is removed from the secondary pipe.

The step of connecting the sensor module to the secondary pipe may comprise the following sub-steps: loosening a locking ring that is arranged on the top of the adapter, inserting the sensing probe into the receiving port of the secondary pipe via the adapter until the tip of the sensing probe is located below the fluid-tight seal and above the ball valve, tightening the locking ring, switching the ball valve to an open state, loosening the locking ring until the sensing probe is able to slide along the through hole of the secondary pipe, fully inserting the sensing probe into the process pipe, and tightening the locking ring again so that the sensing probe is fixed at the main process pipe.

It is to be noted that, in case that the sensor module comprises a sensing probe with a flared probe tip or a top collar, the first sub-step of loosening a locking ring may be replaced by the following sub-steps: detaching the adapter from the secondary pipe, removing the top collar from the sensing probe, loosening the locking ring and inserting the sensing probe into the adapter, re-fitting the top collar at the tip of the sensing probe, and mounting the adaptor to the secondary pipe.

According to another embodiment, the method further comprises cutting a hole on the wall of the process pipe by means of a tapping module that comprises a hot tapping tool.

This step of cutting the hole may be carried out between the step of fixing the secondary pipe to the process pipe and the step of connecting the sensor module to the secondary pipe, so that the hole is provided to enable invasively installing the sensing probe at the process pipe.

Cutting the hole using the tapping module may comprise the following sub-steps: mounting the hot tapping tool of the tapping module to the secondary pipe, switching the ball valve to an open state, driving the cutting tool of the hot-tapping tool into the secondary pipe until the cutting tool reaches the wall of the process pipe, cutting a hole through the pipe wall, withdrawing the cutting tool until the cutting tool is located below a rotary seal of the tapping module and above the ball valve, switching the ball valve to the closed state, and detaching the hot-tapping tool from the secondary pipe.

The hot-tapping tool may be operated manually or under an automatic or semiautomatic control.

Additionally, the method may comprise replacing the sensor module with a second sensor module by detaching the sensor module from the secondary pipe and connecting the second module to the secondary pipe by means of the adapter.

Replacing or swapping the sensor module may comprises the following sub-steps: removing the mounted sensor module by loosening the locking ring until the sensing probe is able to slide along the through hole of the secondary pipe, withdrawing the sensing probe until the tip of the sensing probe is located below the fluid-tight seal and above the ball valve, switching the ball valve to a closed state in order to block fluid flow in the secondary pipe and removing the sensing probe from the secondary pipe completely, followed by connecting a second sensor module to the process pipe as described for connecting the sensor module above.

It is to be noted that, in case that the sensor module comprises a sensing probe with a flared probe tip or a top collar, the sub-step of removing the sensing probe from the secondary pipe completely may be replaced by the following sub-steps: removing the adapter from the receiving port of the secondary pipe, and removing the top collar from the tip of the sensing probe and detaching the probe from the adaptor 210.

These and other aspects will be apparent from and elucidated with reference to the embodiments as per the drawings described hereinafter.

### Brief description of the figures

- Fig. 1: shows schematically a sectional view of a multi-sensor mounting system for detecting or monitoring a characteristic of a plurality of characteristics of a fluid in a process pipe in accordance with an embodiment.
- Fig. 2: shows schematically a sectional view of a multi-sensor mounting system when removing or swapping a sensing module in accordance with an embodiment.
- Fig. 3: shows schematically a tapping module in accordance with an embodiment.
- Fig. 4: shows schematically a flow chart illustrating a method for detecting or monitoring a characteristic or a plurality of characteristics of a fluid in a process pipe by means of a multi-sensor mounting system in accordance with an embodiment.
- Fig. 5a: shows schematically a flow chart illustrating the steps for connecting a sensor module to the process pipe by means of a multi-sensor mounting system for detecting or monitoring a characteristic or a plurality of characteristics of a fluid in accordance with an embodiment.
- Fig. 5b: shows schematically a flow chart illustrating the steps for replacing a sensor module with a second sensor module in accordance with an embodiment.
- Fig. 5c: shows schematically a flow chart illustrating the steps for cutting a hole on the wall of a process pipe by means of a tapping module in accordance with an embodiment.

### Detailed description of embodiments

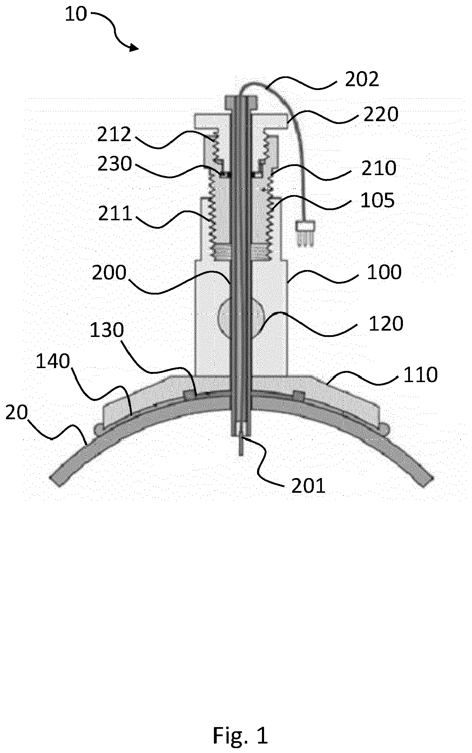

Fig. 1 shows schematically a sectional view of the multi-sensor mounting system 10 for detecting or monitoring a characteristic of a plurality of characteristics of a fluid in a process pipe 20. The multi-sensor mounting system 10 comprises a secondary pipe 100 and an adapter 210 for invasively installing or deploying a sensor module 200 at the process pipe 20 as a main pipe.

The multi-sensor mounting system 10 further comprises a sensor module 200, which comprises a sensing probe 201, and an electronics module, which is connected to the sensing probe via a cable 202. Alternatively, the sensor module may be a self-sufficient sensor without cabling or a wireless sensor that may enable a fully functional wireless sensor communication.

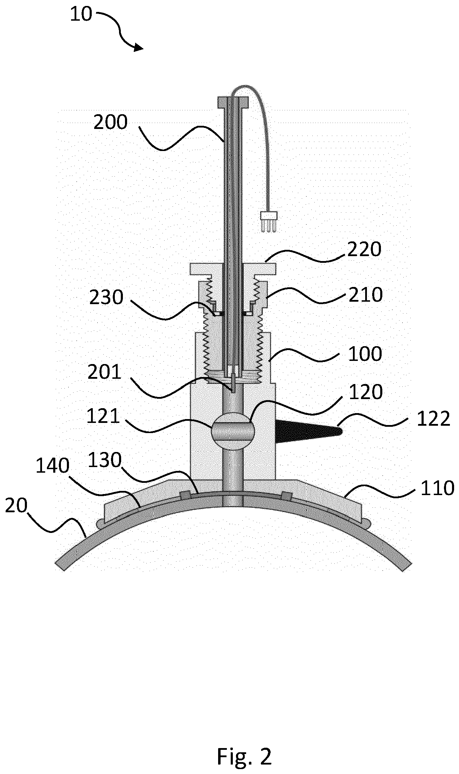

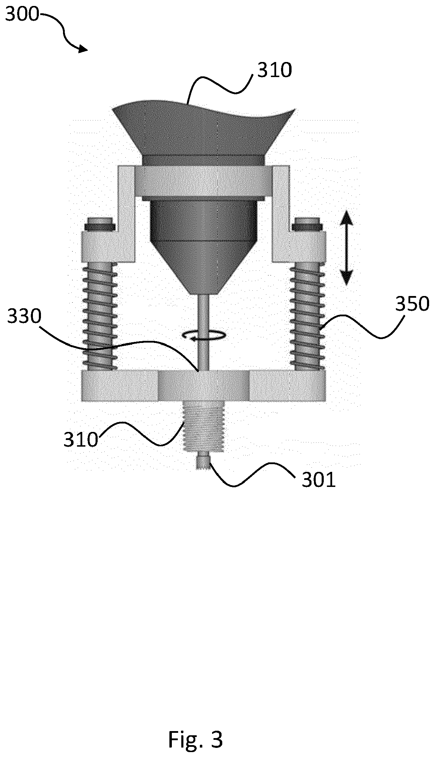

The secondary pipe 100 is radially oriented relative to the main process pipe 20 and is configured to allow mounting a sensor module 200, as shown in Fig. 1 and Fig. 2 or a tapping tool, as shown in Fig. 3, at the process pipe 20. Compared to the main process pipe 20, the secondary pipe 100 is designed to be a short section of a smaller bore pipe.

The sensor module 200 is mounted at a single site of the main process pipe 20.

The sensor module 200 may be a single-use sensor module that may be configured to measure a specific characteristic of a fluid, such as a flow rate, a temperature, a density, a concentration, a pressure, a thermal conductivity, a turbidity, a pH, an activity of an oxidizer or a reducer in a solution. For example, the sensor module 200 may be a hot-tap retractable sensor.

Alternatively or additionally, the sensor module 200 may be a monolithic multi-parameter sensor module or a highly integrated sensor module. In other words, the sensing probe 201 of the sensor module 200 may be a multi-parameter sensing measurement device, which comprises a plurality of sensor elements and configured to be modular and able to detect or measure a plurality of parameters defined above, in particular a bespoke set of characteristics.

Since the sensor module 200 is mounted at the secondary pipe 100 in a detachable manner, the sensor module may easily be changed when a different or an additional characteristic measurement, e.g. for a temporary installation for troubleshooting, is required.

The sensing probe 201 of the sensor module 200, as shown in Fig. 1, is designed to be a rod-shaped or a narrow, cylindrical probe. The tip of sensing probe201 is configured to be inserted into the process pipe 20 for measuring the characteristic or the plurality of the characteristics.

The sensing probe 201 of the sensor module 200 may be a miniaturised sensor probe, which may be of the diameter in the order of several millimetres, for example, 5 mm to 10 mm, or is able to be further scaled down. Due to the reduced sensing probe diameter, the corresponding hole on the wall of the main pipe 20 may also be provided in a small dimension. Therefore, the multi-sensor mounting system 10 may advantageously lower risk of a leakage of the process monitoring system by deploying such a sensing module 200. Also, the reduced dimension of the sensing probe 201 and the hole on the process pipe wall may advantageously result in a negligible effect on the pipe integrity, a reduction in installation costs and complexity.

As a free sensor port for the sensor module 200, the secondary pipe 100 comprises a fastening device 110, which is arranged at an end of the secondary pipe 100 and designed as a curved flange or a saddle flange to fit snugly against the cylindrical process pipe 20, and a valve 120. The valve 120 is a ball valve, as shown in Fig. 1. Alternatively, the valve 120 may be a gate valve.

The secondary pipe 100 further comprises a receiving port 105, which is arranged at the other end of the secondary pipe 100 and configured to allow the sensing probe 201 sliding into the secondary pipe 100 and to allow the adapter 210 mounting to the secondary pipe 100 by means of a first connection, and a hollow through hole, which is configured to allow the sensing probe 201 sliding through when being inserted into the process pipe 20. The receiving port 105 may be a free port of the ball valve 120 or additionally arranged above the ball valve 120.

The ball valve 120 is arranged between the flange 110 and the receiving port 105, and configured to be switchable between an open state and a closed state as respectively shown in Fig. 1 and Fig. 2.

Furthermore, an elastomer seal 130 and an adhesive 140 are arranged between the flange 110 of the secondary pipe 100 and the process pipe wall. The elastomer seal 130 can be designed as a seal ring that is configured to wind around the sensing probe 201 and to provide a primary seal between the flange 110 and the pipe wall once the sensor module 200 is in operation. As a secondary seal, the adhesive 140 is provided on the curved surface of the flange where not covered by the elastomer seal 130. In particular, for ease of application, the adhesive may be designed to be a pre-cut film. In this way, the primary and secondary seals 130, 140 are configured to prevent environmental contaminants and/or the adhesive from ingress into the process pipe 20 and/or the hollow through hole and/or the ball valve of the secondary pipe 100.

Alternatively, the flange 110 may be designed to attach to the process pipe 20 using clamps or a collar that is placed around the process pipe wall. In this case, the elastomer seal 130 may be configured to provide the only seal between the flange 110 and the pipe wall when the sensor module 200 is in operation. The adhesive 140 may be omitted.

Alternatively, depending on the pipe material, the flange 110 may be welded to the process pipe 20. In this case, the weld may be configured to provide a seal when the sensor module is in operation. The elastomer seal 130 and the adhesive 140 may be omitted.

Additionally, the multi-sensor mounting system 10 may further comprise a housing that is configured to be attached to the flange 110 and enclose the flange, and/or the other components of the secondary pipe 100, in order to provide a physical protection (not shown in Fig. 1).

In order to make the sensor port compatible with a wide range of process pipe diameters, the fastening device 110 at the end of the secondary pipe 100 is designed to comprise a plurality of flanges, each of which has an individual flange curvature to mate with the curvature of the process pipe. Alternatively, the fastening device 110 is designed to be a universal flange that is flexible and deformable to suit different pipe diameters.

Furthermore, the receiving port 105 at the other end of the secondary pipe 100 is designed to be adaptable for a plurality of sensing modules of different diameters or sizes and/or for measuring different parameters, e.g. a second sensor module comprising a second sensing probe. In other words, the invasive multi-sensor mounting system 10 is configured to be sensor-independent, which means, the second sensor module may be configured to replace the deployed sensor module 200 at any time in a hot-swapping manner, without affecting the flow in the process pipe 20, by merely replacing the installed sensor probe and the applied electronics module. In case that a second sensing probe comprises a different diameter than the deployed sensing probe 201, the adapter 210 is designed to be able to be swapped as well.

The ball valve 120 of the secondary pipe 100, as shown in Fig. 1 and Fig. 2, is a manual ball valve and comprises a hollow, perforated and pivotable ball element 121 and a valve handle 122 that may be rotated about an axis perpendicular to the flow. Alternatively, the ball valve 120 may be an electric ball valve that may be controlled automatically. The ball element 121 comprises a ball's through hole.

In the open state of the ball valve 120, as shown in Fig. 1, the ball valve is arranged in such a way that the ball's through hole is in line with the through hole of the secondary pipe 100, in order to generate a sliding path for the sensing probe 201 and allow the sensing probe 201 sliding through the ball element 121 and being inserted into the process pipe 20.

In contrast, Fig. 2 shows schematically a sectional view of the multi-sensor mounting system 10 when removing or swapping a sensing module 200.

When the sensor module 200 is removed from the secondary pipe 20 or replaced or swapped by a second sensor module, the ball valve 120 is switched to be in the closed state, as shown in Fig. 2. In the closed state, the ball element 121 is rotated, e.g. 90 degrees from the open state, so that the fluid is not able to flow out from the secondary pipe, e.g. when the tip of the sensing probe 201 is located above the ball valve 120 and below the adapter 210 during the removal of the sensor module 200 or the installation of the a second sensor module.

As shown in Fig. 1 and Fig. 2, the multi-sensor mounting system 20 further comprises a tightening device 220 and a sealing device 230. The tightening device 20 comprises a locking ring and is arranged on the top of the adapter 210. The tightening device 20 is configured to fix the sensor module 200 to the adapter 210 and to the secondary pipe 100. The sealing device 230 is configured to seal the sensing probe 201 of the sensor module 200, the adapter 210 and/or the tightening device 220 from the environment.

As an essential connecting element for installing the sensor module 200, the adapter 201 of the invasive multi-sensor mounting system 10 comprises a first portion 211 and a second portion 212. The first portion 211 of the adapter is configured to be mounted to the secondary pipe 20 by means of a first connection or a first thread connection, and the second portion 212 of the adapter comprises a recess, in which the sealing device 230 are arranged, and is configured to receive the tightening device 220 by means of a second connection or a second thread connection, in order to fix the sensor module 200. Instead of the first and second connections, push-fit connections may be applied to connect the adapter 201 with the secondary pipe 100 and the sensor module 200 firmly.

The adapter 210 comprises a though hole in the second portion 212 of the adapter, which may be of the same diameter as the through hole of the secondary pipe 20. Furthermore, the adapter 210 is configured to allow the sensing probe 201 sliding through the first portion 211 and a second portion 212 of the adaptor and to provide a sliding seal when removing or swapping the sensing module 200.

A fluid-tight seal may be provided between the adapter 210 and the receiving port 105 of the secondary pipe 100. The fluid-tight seal may be designed to be complementary tapered threads at the receiving port 105 and the first portion 211 of the adapter 210. Alternatively, the fluid-tight seal may be designed as a push-fit connection.

A second fluid-tight seal may be provided between the adapter 210 and the tightening device 220, designed as a bonded seal and configured to provide a seal during the normal operation of the sensor module 200 and during the sensing probe 201 being inserted into or withdrawn from the secondary pipe 100. For example, the sealing device 230 or an elastomer sealing device may be bonded to an outer metal washer. The bonded seal is arranged in a counter bore in the top of the adapter 210. In the normal operation of the sensor module 200, the locking ring is tightened, compressing the sealing device and providing a high-quality seal between the adapter and the sensing probe. When inserting or removing the sensing probe, the locking ring is loosened to allow the sensing probe sliding towards the second fluid-tight seal.

In order to retrofit the multi-sensor mounting system 10 to a process pipe 20, in which a fluid is filled or flowing, the multi-sensor mounting system may comprise a tapping module 300 to provide a hole on the wall of the process pipe 20 to allow the sensing probe 201 protruding into the main process pipe 20 for the measurements.

Fig. 3 shows schematically a tapping module 300, which comprise a hot-tapping tool. The tapping module 300 may be configured to be connected to the secondary pipe 100 at the free end of the receiving port 105 and replaceable by means of the sensor module 200.

The hot-tapping tool comprises a cutting tool 301, which may be a rotary cutter or a hole saw, and is configured to cut a hole on the wall of the process pipe 20, through which hole the sensing probe 201 can protruding or be inserted into the hole. The diameter of the hole may be the same as or slightly larger than the diameter of the sensing probe 201.

The tapping module 300 further comprises an electric driver or a drill 310 with a guiding element 350, configured to guide the electric driver 310 and ensure that the correct orientation is maintained during the cutting, a rotary shaft 320 and a rotary seal 330. The electric driver 310 is connected to the cutting tool 301 via the rotary shaft 320, which passes through a rotary seal 330 and is configured to allow driving of the cutting tool 301 towards the process pipe 20 when the ball valve 120 is in an opened state, withdrawal of the cutting tool 301 so that the ball valve 120 can be switched to the closed state, and rotation of the cutting tool 301 during the cutting. The rotary seal 330 is configured to allow the rotary shaft 320 sliding axially into the secondary pipe 100, to seal the tapping module 300 and the secondary pipe 100, and to provide a containment for a fluid flow and to prevent the fluid from leaking out from the tapping module 300, once the wall of the process pipe 100 is breached by means of the cutting tool 301.

As the secondary pipe 100 with the fastening device 110, the ball valve 120 and the receiving port 105 is configured to be an common connecting interface for the sensor module 200 and the tapping module 300, the multi-sensor mounting system 20 may significantly facilitate the deployment of the sensor module 200 for the characteristic measurement by simply replacing the tapping module 300 with the sensor module 110 without or with minimally affecting the fluid in the main process pipe 20.

Furthermore, mechanical reinforcement, that is normally necessary for a conventional sensor mounting system due to the significant change in mechanical integrity of the pipe associated with the hole cutting and sensor installation, may not be required by using the hot-tapping and hot-swapping for the multi-sensor mounting system 10. With the reduced dimension of the hole through the pipe wall and of the sensing probe 201, retrofitting the sensor module of the multi-sensor mounting system may not be carried out only by a specialist installation expert.

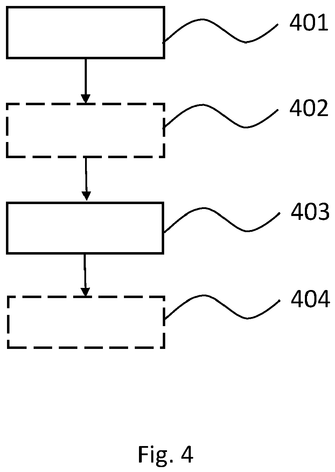

Fig. 4 shows schematically a flow chart illustrating a method for detecting or monitoring a characteristic or a plurality of characteristics of a fluid in a process pipe 20 by means of a multi-sensor mounting system 10.

The method starts at step 401 where a secondary pipe 100 that comprises a fastening device 110 and a valve 120 is provided and the secondary pipe 100 is fixed to the process pipe 20 by means of the fastening device 110.

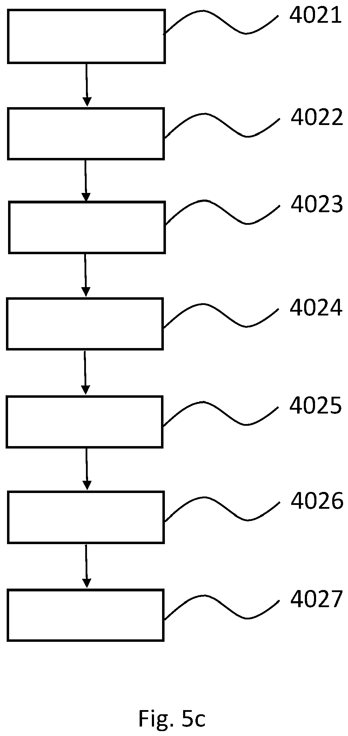

At a further step 402, a hole may be cut on the wall of the process pipe 20 by means of a tapping module 300 that comprises a hot tapping tool. The step 402 may comprise a plurality of the sub-steps as shown in Fig. 5c. In case that a hole is provided on the wall of the process pipe 20, the step 402 may be omitted.

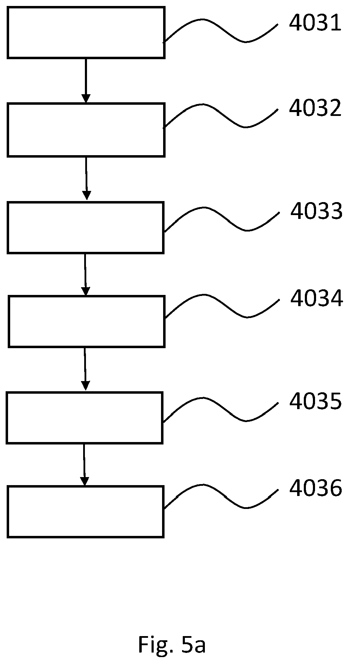

At a further step 403, a sensor module 200, which comprises a sensing probe 201, is connected to the secondary pipe 100 or installed at the process pipe 20 via a secondary pipe 100 in a detachable manner and the sensing probe 201 is inserted into the process pipe by means of an adapter 210. For deploying the multi-sensor mounting system 10 for measuring a fluid characteristic or a plurality of fluid characteristics step 403, the valve 120 of the secondary pipe 100 is configured to allow the sensing probe 201 being inserted into the process pipe in an open state, and to block a fluid flow in the secondary pipe 100 in an closed state, when the sensing probe is removed from the secondary pipe or starts to slide into the secondary pipe 100. The step 403 may comprises a plurality of sub-steps as shown in Fig. 5a.

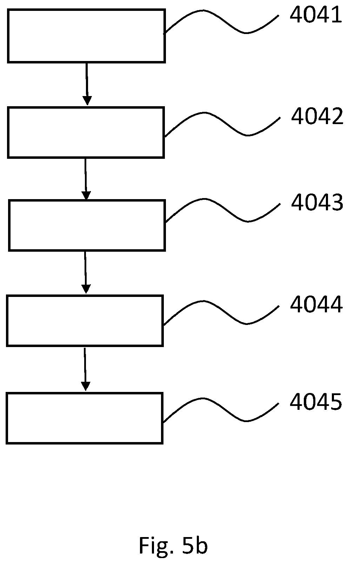

The method may comprise a further step 404 where the sensor module 200 may be replaced or swapped with a second sensor module by detaching the sensor module from the secondary pipe 20 and connecting the second module to the secondary pipe 20 by means of the adapter 210. Depending on differences in design and dimension between the sensor module 201 and the second sensor module, the hop-swapping of the sensor module at step 404 may comprises a plurality of sub-steps as shown in Fig. 5b.

In Fig. 5a, a flow chart illustrates the sub-steps for connecting a sensor module 200 to the process pipe 20 by means of a multi-sensor mounting system 10 for detecting or monitoring a characteristic or a plurality of characteristics of a fluid.

At step 4031, a locking ring that is arranged on the top of the adapter 201 is loosened and the sensing probe 201 is inserted in to the receiving port 103 of the secondary pipe 100 via the adapter 201. As the ball valve 120 is in a closed state, the sensing probe 201 can slide into the secondary pipe 100 until the tip of the sensing probe is located below the fluid-tight seal and above the ball valve 120. At step 4032, the locking ring is tightened, followed by the ball valve 120 is switched to an open state at step 4033. At a further step 4034, the locking ring is loosened until the sensing probe is able to slide along the through hole of the secondary pipe 20. Once the sensing probe 201 is fully inserted into the process pipe 20 at step 4035, the locking ring is tightened again at step 4036 so that the sensing probe is fixed at the main process pipe 20.

Alternatively, in case that the sensor module 200 comprises a sensing probe with a flared probe tip or a top collar, additional sub-steps may comprise: detaching the adapter 210 from the secondary pipe 200, removing the top collar from the sensing probe 201, loosening the locking ring and inserting the sensing probe 201 into the adapter 210, and re-fitting the top collar at the tip of the sensing probe 201, mounting the adaptor to the secondary pipe 100 and following the sub-steps 4032 to 4036.

Fig. 5b shows schematically a flow chart illustrating the sub-steps for hot-swapping or replacing a sensor module 200 with a second sensor module.

Hot-swapping a sensor module that is mounted to the secondary pipe 100 may comprise a plurality of sub-steps for removing the mounted sensor module 200 by following steps 4041 to 4044 and installing a second sensor module 200 to the secondary pipe 100 at step 4045. Starting from step 4041 where the locking ring is loosened until the sensing probe 201 is able to slide along the through hole of the secondary pipe 100, the sensing probe is withdrawn at a subsequent step 4042 until the tip of the sensing probe 201 is located below the fluid-tight seal and above the ball valve 120. At a further step 4043, the ball valve is switched to a closed state in order to block fluid flow in the secondary pipe 100, followed by step 4044 where the sensing probe is removed from the secondary pipe completely. At Step 4045, a second sensor module is connected to the process pipe 20 by following the steps of 4031 to 4036 as shown in Fig. 5a.

Alternatively, in case that the sensor module 200 comprises a sensing probe with a flared probe tip or a top collar, step 4044 is carried out instead by following the sub-steps: the adapter 210 is removed from the receiving port 105 of the secondary pipe 100, and the top collar is removed from the tip of the sensing probe, and the probe is detached from the adaptor 210.

Fig. 5c shows schematically a flow chart illustrating the steps for cutting a hole on the wall of a process pipe 20 by means of a tapping module 300.

The hot-tapping procedure starts at step 4021 where the hot tapping tool of the tapping module 300 is mounted to the secondary pipe 100. Once the ball valve 120 is switched to an open state at step 4022, the cutting tool 301 of the hot-tapping tool is at step 4023 driven into the secondary pipe 100 until the cutting tool 301 reaches the wall of the process pipe 20. At a further step 4024, a hole is cut through the pipe wall, and subsequently, at step 4025, the cutting tool 301 is withdrawn until the cutting tool is located below a rotary seal 330 of the tapping module 300 and above the ball valve 120. After the ball valve is switched to the closed state at step 4026, the hot-tapping tool 300 is detached from the secondary pipe 100.

The hot-tapping tool may be operated manually or under an automatic or semiautomatic control.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

## Claims

1. A multi-sensor mounting system (10) for detecting or monitoring a characteristic or a plurality of characteristics of a fluid in a process pipe (20), comprising:
a secondary pipe (100) that comprises a fastening device (110), configured to fix the secondary pipe (100) to the process pipe (20), and a valve (120), configured to be switchable between an open state and a closed state; and
an adapter (210), configured to connect a sensor module (200) to the secondary pipe (100) in a detachable manner;
wherein the valve (120) of the secondary pipe (100) is configured to allow a sensing probe (201) of the sensor module (200) being inserted into the process pipe (20) in the open state, and to block a fluid flow in the secondary pipe (100) in the closed state, when the sensing probe (201) is removed from the secondary pipe (100).

2. The multi-sensor mounting system (10) according to claim 1, further comprising:
a tightening device (220); and
a sealing device (230);
wherein the tightening device (220) comprises a locking ring and is configured to fix the sensor module (200) to the adapter (210) and to the secondary pipe (100);
wherein the sealing device (230) is configured to seal the sensing probe (201) of the sensor module (200), the adapter (210) and/or the tightening device from the environment.

3. The multi-sensor mounting system (10) according to claim 2,
wherein the adapter (210) comprises a first portion (211) and a second portion (212);
wherein the first portion (211) of the adapter (210) is configured to be mounted to the secondary pipe (100) by means of a first connection; and
wherein the second portion (212) of the adapter comprises a recess, in which the sealing device (230) are arranged, and is configured to receive the tightening device (220) by means of a second connection, in order to fix the sensor module (200);
wherein the adapter (210) is configured to allow the sensing probe (201) sliding through the first portion (211) and a second portion (212) of the adaptor (210) and to provide a sliding seal when removing or swapping the sensing module (200).

4. The multi-sensor mounting system (10) according to one of the preceding claims,
wherein the sensor module (200) is self-powered or connected to an electronics via a cable (202).

5. The multi-sensor mounting system (10) according to one of the preceding claims,
wherein the sensing probe (201) is a multi-parameter sensing measurement device that comprises a plurality of sensor elements.

6. The multi-sensor mounting system (10) according to one of the preceding claims,
wherein the sensing probe (201) of the sensor module (200) is foldable;
wherein the sensing probe (201) is configured to be in a folded state, when sliding in the secondary pipe (100), or in a unfolded state, when the sensing probe (201) is inserted in the process pipe (20).

7. The multi-sensor mounting system (10) according to one of the preceding claims, further comprising:
a tapping module (300) comprising a hot-tapping tool;
wherein the tapping module (300) is configured to be connected to the secondary pipe (100) and replaceable by means of the sensor module (200).

8. The multi-sensor mounting system (10) according to claim 7,
wherein the hot tapping tool comprises a cutting tool (301);
wherein the cutting tool (301) is configured to cut a hole on the wall of the process pipe (20), through which hole the sensing probe (201) can be inserted into the process pipe (20).

9. The multi-sensor mounting system (10) according to one of the preceding claims, further comprising:
a second sensor module comprising a second sensing probe;
wherein the second sensing probe of the second sensor module is configured to replace the sensor probe (201) of the sensor module (200) in a hot-swapping manner.

10. The multi-sensor mounting system (10) according to one of the preceding claims, further comprising:
a third sensor module that comprises an additional sensor element or an additional plurality of sensor elements that is arranged outside the process pipe (20) and/or the secondary pipe (100) and/or in the vicinity of the process pipe and/or the secondary pipe.

11. The multi-sensor mounting system (10) according to claim 10,
wherein the third sensor module is configured to connect to and communicate with the sensor module (200) and/or the second sensor module.

12. The multi-sensor mounting system (10) according to one of the preceding claims, further comprising:
a sealing element (130);
wherein the sealing element (130) is arranged at the fastening device (110) and configured to provide a seal between the secondary pipe (100) and the process pipe (20).

13. The multi-sensor mounting system (10) according to one of the preceding claims, further comprising:
a plugging device;
wherein the plugging device is configured to remove the multi-sensor mounting system (10) or install the multi-sensor mounting system (10) by plugging a hole.

14. Use of a multi-sensor mounting system (10) according to one of the preceding claims for mounting a sensor module (200) to a process pipe (20).

15. Use of a sensor module (200) for a multi-sensor mounting system (10) according to one of the claims 1 to 13 for detecting or monitoring a characteristic or a plurality of characteristics of a fluid in a process pipe (20).

16. Use of an adapter (210) for connecting a sensor module (200) to a multi-sensor mounting system (10) according to one of preceding claims 1 to 13.

17. A method for detecting or monitoring a characteristic or a plurality of characteristics of a fluid in a process pipe (20) by means of a multi-sensor mounting system (10), comprising the steps of:
providing (401) a secondary pipe (100) that comprises a fastening device (110) and a valve (120) and fixing the secondary pipe (100) to the process pipe (20) by means of the fastening device (110);
connecting (403) a sensor module (200), that comprises a sensing probe (201), to the secondary pipe (100) in a detachable manner and inserting the sensing probe (201) into the process pipe (20) by means of an adapter (210);
wherein the valve (120) of the secondary pipe (100) is configured to allow the sensing probe (201) being inserted into the process pipe (20) in an open state, and to block a fluid flow in the secondary pipe (100) in a closed state, when the sensing probe (201) is removed from the secondary pipe (100).

18. The method according to claim 17, further comprising:
cutting (402) a hole on the wall of the process pipe (20) by means of a tapping module (300) that comprises a hot tapping tool;
replacing (404) the sensor module (200) with a second sensor module by detaching the sensor module (200) from the secondary pipe (20) and connecting the second module to the secondary pipe (20) by means of the adapter (210).
